# EUROPEAN PATENT SPECIFICATION

(11) **EP 3 659 853 B1**
(45) Date of publication and mention of the grant of the patent: **07.06.2023**
(21) Application number: 18837414.4
(22) Date of filing: 27.07.2018
(51) Int. Cl.: H01M 8/04858, H02J 1/10, H02J 7/34

(54) **POWER SUPPLY SYSTEM FOR FUEL CELL AND FUEL CELL SYSTEM**
STROMVERSORGUNGSSYSTEM FÜR BRENNSTOFFZELLE UND BRENNSTOFFZELLENSYSTEM
SYSTÈME D'ALIMENTATION ÉLECTRIQUE POUR PILE À COMBUSTIBLE ET SYSTÈME DE PILE À COMBUSTIBLE

(30) Priority: 28.07.2017 CN 201710631930
(43) Date of publication of application: 03.06.2020
(73) Proprietor: Yutong Bus Co., Ltd., Zhengzhou, Henan 450061 (CN)
(72) Inventor: ZHOU, Xin, Zhengzhou Henan 450061 (CN); LI, Feiqiang, Zhengzhou Henan 450061 (CN); ZHANG, Longhai, Zhengzhou Henan 450061 (CN); LI, Weiguo, Zhengzhou Henan 450061 (CN); CAO, Zhuotao, Zhengzhou Henan 450061 (CN); WANG, Chuanqiu, Zhengzhou Henan 450061 (CN)
(74) Representative: Gulde & Partner
(86) International application number: PCT/CN2018/097357
(87) International publication number: WO 2019/020098

(56) References cited:
- CN-A- 1 663 838
- CN-A- 1 663 838
- CN-A- 101 291 074
- CN-A- 106 019 168
- CN-A- 106 019 168
- US-A1- 2014 239 712

## Description

### TECHNICAL FIELD

The present disclosure relates to a fuel cell power supply system and a fuel cell system, which belongs to the technical field of vehicle fuel cell power systems.

### BACKGROUND

Compared with battery electric vehicles, fuel cell vehicles have the characteristics of long mileage range, short charging time and relatively zero pollution, are considered as the ultimate development direction of new energy vehicles. Fuel cell bus is an important application in the field of fuel cells. This new technology is strongly supported by the national policies of the People's Republic of China, which has become an important force in promoting the development of fuel cells.

Currently in the market, fuel cell vehicle power system used on bus utilizes a storage battery and a 24VDC/DC converter of the vehicle to power the fuel cell system. The low voltage power supply to the fuel cell through the vehicle is relatively simple in structure for the present fuel cell system to use, but it has the following two disadvantages. First, the discharge capacity of the storage battery of the vehicle cannot meet the increasing fuel cell power demand, and different fuel cell systems have different low voltage power requirements, therefore such modularization of vehicle energy distribution cannot be achieved. Second, the vehicle supplies power to the fuel cell through the 24VDC/DC converter. Since, high voltage at the input end of the 24VDC/DC converter is taken from the boosting DC/DC converter of the fuel cell, the power undergoes a two-stage DC/DC conversion, resulting in large power loss and low energy efficiency.

The Chinese patent, with publication number CN1663838A, discloses a hybrid power system of a fuel cell vehicle. In the hybrid power system, the electric energy output from the fuel cell stack is converted by a 24VDC/DC converter to power the fuel cell controller, which solves the problem of energy distribution of the vehicle when the low voltage power required by the fuel cell is excessive. However, the fluctuation of the output voltage of the 24VDC/DC converter will greatly shorten the lifetime of the voltage-sensitive electronic components, such as the fuel cell controller. Moreover, the failure of the 24VDC/DC converter will lead to a sudden power outage of the existing fuel cell system and cause irreversible damage to the existing fuel cell system.

The Chinese patent, with publication number CN106019168A, discloses a testing system for a DC-DC converter of a fuel cell vehicle. The system comprises a boost type DC-DC converter, a buck type DC-DC converter, a low-voltage storage battery group, a high-voltage storage battery group, a pre-charging and protection circuit, and an upper computer communication network. The boost type DC-DC converter and the buck type DC-DC converter form an energy cycle system.

### SUMMARY

The objective of the present disclosure is to provide a fuel cell power supply system and a fuel cell system, in order to solve the technical problem that the fuel cell stack cannot provide a stable and reliable low voltage power supply for the fuel cell system.

In order to solve the above technical problem, the present disclosure provides a fuel cell power supply system, including a fuel cell stack, a 24VDC/DC converter, and a fuel cell controller. The high voltage input end of the 24VDC/DC converter is connected to the fuel cell stack, and the low voltage output end of the 24VDC/DC converter is connected to the low voltage busbar of the fuel cell. The low voltage busbar of the fuel cell is electrically connected to the fuel cell controller, and the storage battery for the fuel cell. The storage battery is configured to supply power to the fuel cell controller if the 24VDC/DC converter suddenly fails.

Further, a protective relay is arranged at the output end of the storage battery for the fuel cell, and the fuel cell controller is connected to and controls the protective relay.

Further, the fuel cell power supply system further includes a boosting DC/DC converter. The low voltage input end of the boosting DC/DC converter is connected to the fuel cell stack, and the high voltage output end of the boosting DC/DC converter is configured to be electrically connected to an in-vehicle high voltage electrical device.

Further, a first load relay is arranged between the fuel cell stack and the 24VDC/DC converter, and a second load relay is arranged between the fuel cell stack and the boosting DC/DC converter. The fuel cell controller is connected to and controls the first load relay and the second load relay.

Further, a CAN bus is arranged to connect between the fuel cell controller and the 24VDC/DC converter, and a CAN bus is arranged to connect between the fuel cell controller and the fuel cell stack.

The present disclosure further provides a fuel cell system, including an in-vehicle device, a fuel cell power supply system, and a fuel cell accessory system. The fuel cell power supply system includes a fuel cell stack, a 24VDC/DC converter, and a fuel cell controller. The high voltage input end of the 24VDC/DC converter is connected to the fuel cell stack, and the low voltage output end of the 24VDC/DC converter is connected to a low voltage busbar of the fuel cell. The low voltage busbar of the fuel cell is electrically connected to the fuel cell controller, the fuel cell accessory system, and a storage battery for the fuel cell.

Further, a protective relay is arranged at the output end of the storage battery for the fuel cell, and the fuel cell controller is connected to and controls the protective relay.

Further, the fuel cell power supply system further includes a boosting DC/DC converter. The in-vehicle device includes an in-vehicle high voltage electrical device. The high voltage output end of the boosting DC/DC converter is electrically connected to the in-vehicle high voltage electrical device.

Further, a first load relay is arranged between the fuel cell stack and the 24VDC/DC converter, and a second load relay is arranged between the fuel cell stack and the boosting DC/DC converter. The fuel cell controller is connected to and controls the first load relay and the second load relay.

Further, the in-vehicle device further includes a vehicle controller and an in-vehicle low voltage power supply device. The vehicle controller is connected to and communicates with the fuel cell controller, and the in-vehicle low voltage power supply device is electrically connected to the fuel cell controller.

The advantages of the present disclosure are as follows.

Both the low voltage output end of the 24VDC/DC converter and the output end of the storage battery for a fuel cell are connected to a low voltage busbar of the fuel cell, and the low voltage busbar of the fuel cell is used for supplying power for the fuel cell controller and the fuel cell accessory system. Connecting the low voltage busbars of the fuel cell to the storage battery for the fuel cell has two functions. Firstly, the voltage can be stabilized. Since the voltage at the output end of the DC/DC converter fluctuates, the storage battery for the fuel cell is added to eliminate as much as possible the impact of voltage fluctuation on power supply for the fuel cell controller and the fuel cell accessory system. Secondly, the influence on the low voltage power supply system caused by the failure of the 24VDC/DC converter can be avoided. Even if the 24VDC/DC converter suddenly fails, the storage battery for the fuel cell can also be used for supplying power, thereby guaranteeing the safety of the fuel cell system.

Further, by setting the protective relay at the output end of the storage battery for the fuel cell, the fuel cell controller protects the storage battery for the fuel cell from loss of power by controlling the on-off of the protective relay.

### BRIEF DESCRIPTION OF THE DRAWING

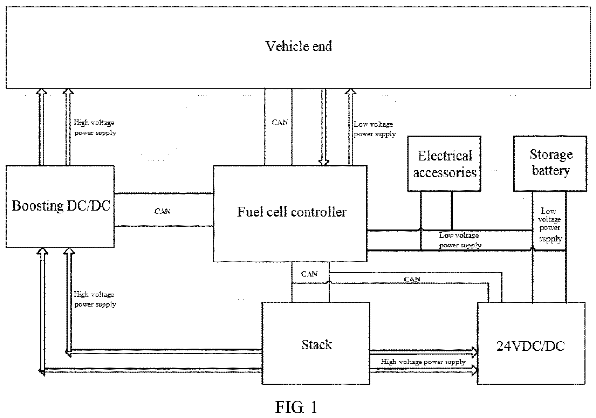

FIG. 1 is a schematic diagram of the configuration of the fuel cell system of the present disclosure.

### DETAILED DESCRIPTION OF THE EMBODIMENTS

In order to make the objective, technical solution and advantages of the present disclosure more clear, the present disclosure is further described in detail in combination with the drawing and specific embodiments below.

As shown in FIG. 1, the fuel cell system of the present disclosure includes an in-vehicle device, a fuel cell power supply system, and a fuel cell accessory system (i.e. the electrical accessory in FIG. 1). The fuel cell power supply system is connected to the in-vehicle device and the fuel cell accessory system. The fuel cell accessory system includes a water pump, a fan, a solenoid valve along with other low voltage equipment. The in-vehicle device includes a vehicle controller, an in-vehicle high voltage electrical device, an in-vehicle low voltage power supply device, and other vehicle equipment. The fuel cell power supply system includes a fuel cell stack, a 24VDC/DC converter, a storage battery for the fuel cell, a fuel cell controller, a boosting DC/DC converter among other fuel cell equipment.

Specifically, the high voltage input end of the 24VDC/DC converter is connected to the fuel cell stack, and the low voltage output end of the 24VDC/DC converter is connected to a low voltage busbar of the fuel cell. The low voltage busbar of the fuel cell is connected to the fuel cell controller, the fuel cell accessory system, and the storage battery for the fuel cell. The fuel cell stack is further connected to the low voltage input end of the boosting DC/DC converter, and the high voltage output end of the boosting DC/DC converter is electrically connected to the in-vehicle high voltage electrical device. The in-vehicle low voltage power supply device is also electrically connected to the fuel cell controller, and the vehicle controller is connected to and controls the fuel cell controller through a CAN bus.

In addition, a protective relay is arranged at the output end of the storage battery for the fuel cell, and the fuel cell controller is connected to and controls the protective relay. The fuel cell controller protects the storage battery for the fuel cell from loss of power by controlling the on-off of the protective relay. A first load relay is arranged between the fuel cell stack and the 24VDC/DC converter, and a second load relay is arranged between the fuel cell stack and the boosting DC/DC converter. The fuel cell controller is connected to and controls the first load relay and the second load relay. A CAN bus is arranged to connect between the fuel cell controller and the 24VDC/DC converter, and a CAN bus is arranged to connect between the fuel cell controller and the fuel cell stack. The fuel cell controller is connected to and communicates with the 24VDC/DC converter and the fuel cell stack through the CAN bus.

The working process of the fuel cell system mentioned above is as follows.
(1) After the vehicle is powered on, the low voltage power supply of the vehicle supplies power to the core part of the fuel cell controller, and the fuel cell controller performs the system self-test. After passing the self-test, the fuel cell controller begins to receive the control commands from the vehicle controller. In this process, the vehicle still needs to provide the necessary low voltage power supply.
(2) When the fuel cell controller can receive the control commands from the vehicle controller, the fuel cell controller judges the current working state of the fuel cell stack, and then the fuel cell controller controls the load relays at ends of the stack to be turned on, wherein the load relays at ends of the stack includes the first load relay connected between the fuel cell stack and the 24VDC/DC converter, and the second load relay connected between the fuel cell stack and the boosting DC/DC converter.
(3) When the load relays are turned on, the fuel cell controller calculates a target current according to the power required by the electrical accessories of the system and sends a command about the target current to the 24VDC/DC converter through the CAN bus. Then, the 24VDC/DC converter converts the electric current of the fuel cell stack to a low voltage power of 24V for the fuel cell system.

Under a normal operating state, the 24VDC/DC converter is used to supply power to the fuel cell controller and the fuel cell electrical accessories. Meanwhile, a 24V storage battery for the fuel cell located at the output end of the 24VDC/DC converter, ensures the stability of the low voltage power supply and ensures short-term power supply in the case of failure of the 24VD/DC converter, so as to guarantee the safety of the fuel cell system.

## Claims

1. A fuel cell power supply system, comprising a fuel cell stack, a 24VDC/DC converter (24VDC/DC), and a fuel cell controller,
a high voltage input end of the 24VDC/DC converter is connected to the fuel cell stack, **characterized in that**, a low voltage output end of the 24VDC/DC converter is connected to a low voltage busbar of the fuel cell; the low voltage busbar of the fuel cell stack is electrically connected to the fuel cell controller and a storage battery for the fuel cell stack, wherein storage battery is configured to supply power to the fuel cell controller if the 24VDC/DC converter suddenly fails.

2. The fuel cell power supply system according to claim 1, **characterized in that**, a protective relay is arranged at an output end of the storage battery for the fuel cell stack and the fuel cell controller is connected to and controls the protective relay.

3. The fuel cell power supply system according to claim 1 or 2, **characterized in that**, further comprising a boosting DC/DC converter; a low voltage input end of the boosting DC/DC converter is connected to the fuel cell stack, and a high voltage output end of the boosting DC/DC converter is configured to be electrically connected to an in-vehicle high voltage electrical device.

4. The fuel cell power supply system according to claim 3, **characterized in that**, a first load relay is arranged between the fuel cell stack and the 24VDC/DC converter, and a second load relay is arranged between the fuel cell stack and the boosting DC/DC converter; the fuel cell controller is connected to and controls the first load relay and the second load relay.

5. The fuel cell power supply system according to claim 1 or 2, **characterized in that**, a CAN bus is arranged to connect between the fuel cell controller and the 24VDC/DC converter, and a CAN bus is arranged to connect between the fuel cell controller and the fuel cell stack.

6. A fuel cell system, comprising an in-vehicle device, a fuel cell power supply system according to one of the preceding claims, and a fuel cell accessory system electrically connected to the low voltage busbar of the fuel cell stack.

7. The fuel cell system according to claim 6, **characterized in that**, the in-vehicle device further comprises a vehicle controller and an in-vehicle low voltage power supply device; the vehicle controller is connected to, and communicates with the fuel cell controller, and the in-vehicle low voltage power supply device is electrically connected to the fuel cell controller.

## Patentansprüche

1. Brennstoffzellen-Stromversorgungssystem, das einen Brennstoffzellenstapel, einen 24VDC/DC-Wandler (24VDC/DC) , und eine Brennstoffzellen-Steuerung umfasst, wobei ein Hochspannungseingangsende des 24VDC/DC-Wandlers mit dem Brennstoffzellenstapel verbunden ist, **dadurch gekennzeichnet, dass** ein Niederspannungsausgangsende des 24VDC/DC-Wandlers mit einer Niederspannungssammelschiene der Brennstoffzelle verbunden ist; wobei die Niederspannungs-Sammelschiene des Brennstoffzellenstapels elektrisch mit der Brennstoffzellen-Steuerung und einem Akkumulator für den Brennstoffzellenstapel verbunden ist, wobei der Akkumulator so konfiguriert ist, dass sie die Brennstoffzellen-Steuerung mit Strom versorgt, wenn der 24 VDC/DC-Wandler plötzlich ausfällt.

2. Brennstoffzellen-Stromversorgungssystem nach Anspruch 1, **dadurch gekennzeichnet, dass** an einer Ausgangsseite des Akkumulators für den Brennstoffzellenstapel ein Schutzrelais angeordnet ist und die Brennstoffzellen-Steuerung mit dem Schutzrelais verbunden ist und dieses steuert.

3. Brennstoffzellen-Stromversorgungssystem nach Anspruch 1 oder 2, **dadurch gekennzeichnet, dass** es ferner einen DC/DC-Aufwärtswandler umfasst, wobei ein Niederspannungseingangsende des DC/DC-Aufwärtswandlers mit dem Brennstoffzellenstapel verbunden ist und ein Hochspannungsausgangsende des DC/DC-Aufwärtswandlers so konfiguriert ist, dass es elektrisch mit einer elektrischen Hochspannungsvorrichtung im Fahrzeug verbunden ist.

4. Brennstoffzellen-Stromversorgungssystem nach Anspruch 3, **dadurch gekennzeichnet, dass** ein erstes Lastrelais zwischen dem Brennstoffzellenstapel und dem 24-V-DC/DC-Wandler angeordnet ist und ein zweites Lastrelais zwischen dem Brennstoffzellenstapel und dem DC/DC-Aufwärtswandler angeordnet ist; wobei die Brennstoffzellen-Steuerung mit dem ersten Lastrelais und dem zweiten Lastrelais verbunden ist und diese steuert.

5. Brennstoffzellen-Stromversorgungssystem nach Anspruch 1 oder 2, **dadurch gekennzeichnet, dass** ein CAN-Bus so angeordnet ist, dass er eine Verbindung zwischen der Brennstoffzellen-Steuerung und dem 24 VDC/DC-Wandler herstellt, und dass ein CAN-Bus so angeordnet ist, dass er eine Verbindung zwischen der Brennstoffzellen-Steuerung und dem Brennstoffzellenstapel herstellt.

6. Brennstoffzellensystem, umfassend eine fahrzeuginterne Vorrichtung, ein Brennstoffzellen-Stromversorgungssystem nach einem der vorhergehenden Ansprüche und ein Brennstoffzellen-Zubehörsystem, das elektrisch mit der Niederspannungs-Sammelschiene des Brennstoffzellenstapels verbunden ist.

7. Brennstoffzellensystem nach Anspruch 6, **dadurch gekennzeichnet, dass** die fahrzeuginterne Vorrichtung ferner eine Fahrzeugsteuerung und eine fahrzeuginterne Niederspannungs-Stromversorgungsvorrichtung umfasst, wobei die Fahrzeugsteuerung mit der Brennstoffzellen-Steuerung verbunden ist und mit dieser kommuniziert, und die fahrzeuginterne Niederspannungs-Stromversorgungsvorrichtung elektrisch mit dem Brennstoffzellensteuergerät verbunden ist.

## Revendications

1. Système d'alimentation de pile à combustible, comprenant un empilement de piles à combustible, un convertisseur 24VDC/DC (24VDC/DC) , et une commande de pile à combustible, une extrémité d'entrée haute tension du convertisseur 24VDC/DC est connectée à l'empilement de piles à combustible, **caractérisé en ce qu'**une extrémité de sortie basse tension du convertisseur 24VDC/DC est connectée à une barre omnibus basse tension de la pile à combustible ; la barre omnibus basse tension de l'empilement de piles à combustible étant connectée électriquement à la commande de piles à combustible et à une batterie de stockage pour l'empilement de piles à combustible, dans lequel la batterie de stockage est configurée pour fournir de l'énergie à la commande de piles à combustible si le convertisseur 24VDC/DC tombe soudainement en panne.

2. Système d'alimentation électrique à pile à combustible selon la revendication 1, **caractérisé en ce qu'**un relais de protection est disposé à une extrémité de sortie de la batterie de stockage pour l'empilement de piles à combustible, et la commande de pile à combustible est connectée au relais de protection et le commande.

3. Système d'alimentation électrique à pile à combustible selon la revendication 1 ou 2, **caractérisé en ce qu'**il comprend en outre un convertisseur CC/CC survolteur ; une extrémité d'entrée basse tension du convertisseur CC/CC survolté étant connectée à l'empilement de piles à combustible, et une extrémité de sortie haute tension du convertisseur CC/CC survolteur étant configurée pour être connectée électriquement à un dispositif électrique haute tension à l'intérieur du véhicule.

4. Système d'alimentation électrique à pile à combustible selon la revendication 3, **caractérisé en ce qu'**un premier relais de charge est disposé entre l'empilement de piles à combustible et le convertisseur 24VDC/DC, et un deuxième relais de charge est disposé entre l'empilement de piles à combustible et le convertisseur DC/DC survolteur; la commande de pile à combustible est connectée au premier relais de charge et au deuxième relais de charge et les commande.

5. Système d'alimentation électrique de pile à combustible selon la revendication 1 ou 2, caractérisé en ce que'un bus CAN est disposé pour se connecter entre la commande de pile à combustible et le convertisseur 24VDC/DC, et un bus CAN est disposé pour se connecter entre la commande de pile à combustible et l'empilement de piles à combustible.

6. Système de piles à combustible, comprenant un dispositif embarqué, un système d'alimentation de piles à combustible selon l'une des revendications précédentes, et un système d'accessoires de piles à combustible connecté électriquement à la barre omnibus basse tension de l'empilement de piles à combustible.

7. Système de pile à combustible selon la revendication 6, **caractérisé en ce que** le dispositif embarqué comprend en outre une commande de véhicule et un dispositif d'alimentation basse tension embarqué ; la commande de véhicule étant connectée à la commande de pile à combustible et communique avec celle-ci, et le dispositif d'alimentation basse tension embarqué est connecté électriquement à la commande de pile à combustible.
